# EUROPEAN PATENT APPLICATION

(11) **EP 2 392 543 A1**
(43) Date of publication of application: **07.12.2011**
(21) Application number: 10005746.2
(22) Date of filing: 02.06.2010
(51) Int. Cl.: B82B 1/00, B82B 3/00, C04B 41/49, C08F 210/12, C09D 5/16, C23F 11/14, C23F 11/18

(54) **Feedback active coatings with sensitive containers based on nano-, micro-, mini-, and macroemulsions of direct or reversed type**

(71) Applicant: Max-Planck-Gesellschaft zur Förderung der Wissenschaften e.V., 80539 München (DE)
(72) Inventor: Grigoriev, Dmitry, 13437 Berlin (DE); Shchukin, Dmitry, 13353 Berlin (DE); Möhwald, Helmuth, 55411 Bingen (DE)
(74) Representative: Katzameyer, Michael

(57) **Abstract**

The invention relates to Nano- or microsized containers comprising either a water immiscible or sparingly miscible core dispersible in aqueous dispersion medium or a water miscible core dispersible in non-aqueous dispersion medium and a core-soluble active agent which is selected from the groups of corrosion inhibitors, catalysts, accelerators of catalysts, adhesives, sealants, polymerizable compounds (monomers), surfactants, lubricants, antifouling agents, water repelling materials or their mixtures, and a stimulus-sensitive polymer/polyelectrolyte shell which is capable to encapsulate the core-soluble active agent and release the encapsulated agent in response to an external stimulus, in particular selected from the group consisting of humidity, ionic strength, pH, temperature, mechanical stress, constant and alternating magnetic or electromagnetic fields, corrosion products, electric current, and electrochemical potential.

The invention also relates to feedback active coatings comprising said containers which have a broad range of application and can be used, for example, in the field of corrosion protection of metals, protection of wet surfaces from fouling, or production of new water-repelling materials for textile industry.

## Description

The present invention discloses several new approaches for the formation of various types of nano- and microcontainers with "smart" shells of various natures sensitive to the impact of different opening triggers/stimuli and cores containing diverse active agents for the further application in self-healing protection coatings. Being embedded into protective coatings deposited on different substrates these nano- and microcontainers impart a feedback active feature to this coating: Nano- and microcontainers where active agent is safely stored in the absence of external stimuli perform the sustained release of active agent on demand exactly at the damaged site of coating and of amount needed for the correction or complete elimination of damage.

Surfaces of virtually any natural or artificial material tend to be imparted or deteriorated by the action of various detrimental agents/factors which comprise a broad range of chemical or physical agents/factors including organisms. An especially important problem is the corrosion degradation of metallic surfaces and structures, in particular caused by the presence of oxygen and humidity.

In order to protect substrate surfaces and/or to improve their properties, it is well-known to apply different kinds of coatings on the respective surfaces and a broad range of effective coatings for different purposes and substrate surfaces is disclosed and available in the prior art. However, the conventional coatings of the prior art suffer from the drawback that they are not able to provide controllable release of the active agent and, in particular, are not able to provide the controllable release of the active agent in response to a damage on demand exactly at the damaged site of coating and in the amount needed for the correction or complete elimination of damage.

Specifically in the field of corrosion protection, stimulus-sensitive coatings comprising nanoreservoirs of corrosion inhibitor have been developed wherein the nanoreservoirs are able to release the corrosion inhibitor on demand on the site of the corrosion-induced damage of the coating and, thus, self-healing properties of the coating are provided (EP Patent Applications 06004993.9 and 08020394.6, respectively). Typically, SiO₂ or TiO₂ nanoparticles coated with different polyelectrolyte layers were employed as nanoreservoirs in said coatings.

This approach, however, enables only to use a limited range of corrosion inhibitors and not the broad range of active agents required or desirable for protecting other substrate surfaces against the influence of other detrimental agents/factors. Thus, it cannot be easily adapted to the specific needs in other fields of protective coating. Further advantages of the present invention over the approach presented in EP Patent Applications 06004993.9 and 08020394.6 are (i) essentially higher loading capacity of active agents in the liquid capsule core than in the porous solid (ceramic) scaffold; (ii) possibility of direct encapsulation of nonpolar water-insoluble or oily active agents without necessary additional complex steps for modification of ceramic containers scaffolds; (iii) possibility to synthesize directly the containers shells with the chemical and physical properties providing their dispersibility and colloidal stability in the desired coating formulation without any additional modification steps; (iv) possibility to synthesize directly the containers shells with the chemical composition providing and exactly determining their specific stimulus-sensitive ability to response to various detrimental agents/factors without any additional modification steps.

Consequently, in spite of significant success in development of protective coatings, in particular anticorrosion coatings, in the recent past there is still a need for a further improved combination of active agents, such as corrosion inhibitors, catalysts, promoters, adhesives, sealants, polymerizable monomers, surfactants, lubricants, antifouling agents, water repelling materials etc., and a coating matrix with respect to costs and protective properties.

Thus, a main object of the present invention is to provide new economical, very effective and broadly applicable means for long-term protection of different surfaces with controlled release of the active agent(s), in particular in response to an external impact on the coating.

Said object is achieved according to the present invention by providing the containers according to claim 1 comprising either a water immiscible or sparingly miscible core dispersible in aqueous dispersion medium or a water miscible core dispersible in non-aqueous dispersion medium and a core-soluble active agent encapsulated by a stimulus-sensitive shell as well as by providing the stimulus-sensitive coating according to claim 14. Specific embodiments of the invention are subject of the dependent claims.

### Description of the Invention

The inventive containers according to claim 1 are nano- or microsized containers comprising either a water immiscible or sparingly miscible core dispersible in aqueous dispersion medium or a water miscible core dispersible in non-aqueous dispersion medium and a core-soluble active agent which is selected from the group of corrosion inhibitors, catalysts, accelerators of catalysts (promotors), adhesives, sealants, polymerizable compounds (monomers), surfactants, lubricants, antifouling agents, water repelling materials or their mixtures, and a stimulus-sensitive polymer/polyelectrolyte shell which is capable to encapsulate the core-soluble active agent and to release the encapsulated agent in response to an external stimulus, in particular selected from the group consisting of humidity, ionic strength, pH, temperature, mechanical stress, constant and alternating magnetic or electromagnetic fields, corrosion products, electric current, and electrochemical potential. A preferred stimulus is a change of pH.

The stimulus-sensitive shell may comprise one or more layers of any suitable material which is sensible to one or more of the above stimuli and capable to release the active agent(s) after action of said stimulus. Typically, said shell consists of or comprises a natural or synthetic organic or inorganic polymer (including a synthetic silica or titania-based shell), a polyelectrolyte, a nanoparticulate inorganic material, or an inorganic-organic composite.

More specifically, the stimulus-sensitive shell comprises one or more layers of a polymer or polyelectrolyte selected from the group consisting of poly(alkylene imine), e.g. poly(ethylene imine), poly(styrene sulfonate), poly(allyl amine), polyvinyl alcohol, poly(hydroxybutyric acid), polystyrene, poly(diallyldimethylammonium chloride), poly(meth)-acrylic acid, polyalkylene glycol, e.g. polyethylene glycol, poly(vinylpyridine), and biopolymers and polyamino acids, such as gelatin, agarose, cellulose, alginic acid, dextran, casein, polyarginine, polyglycin, polyglutamic acid, polyaspartic acid, and derivatives, polyNIPAM, polyazo derivatives, light-sensitive metal and metal oxide nanoparticles, dyes, composites, copolymers or blends thereof.

Other suitable polymers will be evident for the skilled artisan and may be obtained by, e.g., modifying the above polymers/polyelectrolytes or other polymers/polyelectrolytes as appropriate by introducing specific groups according to methods well known in the art. These groups may confer specific desirable properties to the polymer/polyelectrolyte, such as a defined hydrophilicity, hydrophobicity, charge, strength, sensibility for a specific stimulus etc. The polymer or polyelectrolyte may also comprise copolymers or blends of suitable polymers/polyelectrolytes, such as copolymers or blends of the above mentioned polymers or polyelectrolytes.

For example, the shell can be modified with cationic, anionic, zwitterionic and non-ionic surfactants, metal or semiconductor oxide nanoparticles, coupling agents such as alkoxysilanes, silanes, alkylisocyanates, anhydrides and halogenated anhydrides of organic acids, thioles. Such modifications provide homogeneous distribution, chemical and colloidal stability, structure integrity and compatibility to the various types of coatings suitable for the present invention.

In a specific embodiment of the present invention, the polyelectrolyte shell comprises alternate layers of a positively charged polyelectrolyte, e.g. poly(ethylene imine) (PEI) or poly(allylamine hydrochloride) (PAH), and of a negatively charged polyelectrolyte, e.g. poly(styrene sulfonate) (PSS).

In one basic embodiment of the invention, the containers have a water immiscible or sparingly miscible fluid interior comprising or consisting of saturated, cyclic or unsaturated hydrocarbons, silicone oil, ketones, aldehydes, fatty carboxylic acids and alcohols, esters, ethers, fatty amines, imines, imides, organometallics and their derivatives or any mixtures thereof. Such containers are particularly suited for the incorporation of non-polar active agents or agents with low polarity.

In another basic embodiment of the invention, the containers have water-miscible fluid interior comprising or consisting of water, ketones, aldehydes, carboxylic acids, alcohols, esters, ethers, amines, imines, imides, organometallics and their derivatives or any mixtures thereof. Such containers are particularly suited for the incorporation of polar, in particular water-soluble, active agents.

In a preferred embodiment of the invention, the core-soluble active agent comprises a corrosion inhibitor or a mixture of two or more corrosion inhibitors. The corrosion inhibitor(s) may be any organic or inorganic corrosion inhibitor known in the prior art, which is suitable for the intended purpose. The choice of the inhibitor will depend, e.g., on the specific metallic products and structures to be protected, on the environmental conditions and operating conditions of the corrosion-protected products and other factors, which will be evident for the skilled person in the art.

More specifically, the corrosion inhibitor is selected from one or more of the following groups: (i) an organic compound containing an amino group, carboxyl group or salts of carboxylic acids, pyridinium group, pyrazine group, an azole-derivative compound, one or more Schiff bases, (ii) an organic compound comprising one or more anions selected from the group comprising polyphosphate and its derivatives, nitrite, silicate, molybdate and polymolybdate and its derivatives, borate, iodate, permanganate, tungstate and polytungstate and its derivatives, vanadate and polyvanadate and its derivatives, (iii) an organic or inorganic compound comprising one or more cations selected from the group comprising lanthanides, magnesium, calcium, titanium, zirconium, yttrium, chromium and silver.

In another preferred embodiment, the core-soluble active agent comprises a polymerizable chemical compound (monomer) having one or more polymerizable reactive units selected from the group comprising acryl-, vinyl-, methacryl-, cyanoacryl-, isocyanate-, alkoxy-, hydroxy-, and carboxy functional groups, diene- and polyene compounds or their mixtures.

In another preferred embodiment, the core-soluble active agent comprises an adhesive and said adhesive preferably comprises a pre-polymerized monomer or oligomer made of monomers as defined above, or their mixture with one or some solvents. Additionally or alternatively the core-soluble active agent may comprise polymerization catalysts, other adhesives, sealants, wetting promoters and fillers.

In still another preferred embodiment, the core-soluble active agent comprises a lubricant which is a chemical compound or a mixture of compounds selected from the group comprising fatty acids and their metal salts, fatty alcohols, fatty amines, long-chain hydrocarbons, fluorinated hydrocarbons, glycerol, glycols, and other polyols, polysaccharides and their derivatives.

In another preferred embodiment, the core-soluble active agent comprises a water repelling material which is a chemical compound or a mixture of compounds selected from the group comprising fatty acids and their metal salts, fatty alcohols, fatty amines, cationic, anionic, zwitterionic and non-ionic surfactants, long-chain alkylthioles, long-chain alkylisocyanates, long-chain hydrocarbons, fluorinated hydrocarbons, alkoxysilanes, silanes.

Such containers and coatings comprising the same are in particular suitable for the production of new water-repelling materials in the textile industry.

In a further preferred embodiment, the core-soluble active agent comprises an antifouling agent or mixture of them acting against accumulation of aquatic organisms, such as bacteria or other microorganisms, fungi, plants, algae, molluscs etc., on wetted solid surfaces. The antifouling agents are preferably selected from the group comprising salts of aluminium and transition metals, metaldehyde (molluscicides), quaternary ammonium compounds (algicides), hydantoin and its halogenated derivatives, organosulfur compounds (fungicides), azoles, azines and oximides, carbendazim and other derivatives of benzimidazole, organic amines, phosphonium salts, carbanilates and their derivatives, carbamates and their derivatives.

The containers of the invention may be prepared by using suitable nano-, micro-, mini-, and macroemulsions of direct or reversed types. Techniques for preparing such emulsions and vesicles or nanocapsules therefrom are principally known in the art and disclosed for example in Annu. Rev. Mater. Res. 2006, 36, 231-279; J. Microencapsul. 2004, 21, 729-741; J. Am. Chem. Soc. 2005, 127, 4160-4161; Colloid Polym. Sci. 2006, 284, 780-787; J. Phys. Chem. B 2008, 11, 5403-5411, and EP 1552820 B1.

Some preferred general methods for preparing different containers of the present invention are as follows.

A nano-, micro-, mini-, or macroemulsion of direct (nonpolar or less polar dispersed phase in polar dispersion medium) or reversed type (polar dispersed phase in nonpolar or less polar dispersion medium) is prepared using high-pressure homogenizers of various types including shear and membrane emulsification, self-emulsification methods or ultrasound as dispersing tool. Active agent is dissolved in the droplets of the dispersed phase and is insoluble (or sparingly soluble) in dispersion medium. Colloidal stability of the emulsion is achieved by means of appropriate emulsifier of surfactant or mixture of two or more of them. The containers shell is fabricated by interface polymerization and polycondensation, physical and chemical interface deposition, photopolymerization, free radical polymerization, Layer-by-Layer assembly, self-assembly techniques, or cross-linking. Ultrasound can serve simultaneously as an energy source for physico-chemical processes leading to the formation of the containers shell.

Coatings comprising the containers as disclosed above and capable to controlled release of the encapsulated active agent in response to an external stimulus/impact on the coating represent a further aspect of the present invention.

Said coating may be any coating, which is intended to protect the surface of a substrate from the detrimental action of one or more external agents/factors and/or intended to improve one or more desirable properties of said surface. The terms "protecting" or "protection" as used herein should be understood in a broad sense and include both preventive and repairing/healing actions due to the presence of the containers/coatings of the invention. Also said terms include not only preventing and/or repairing an actual damage of the substrate surface or coating but also counter-acting any influence regarded as undesirable per se. For example, water-repellency may be a very desirable property for textile materials even if the presence of water is unlikely to damage the specific material as such.

More specifically, the coating may be a natural or synthetic polymer coating, powder coating, sol-gel coating, galvanic coating, deep coating, coil coating, spray coating, furnish, polyelectrolyte multilayers, pre-treatments (initial binding layers on a metal surface), primer, adhesive, paint or their mixture.

More specifically, water born silica/zirconia sol-gel coatings containing containers with silica or titania shells filled with a water immiscible organic phase and oil soluble, in particular heterocyclic, corrosion inhibitors are especially suited for the protection of metal substrates, in particular substrates made of steel, copper, aluminum or aluminum alloys. The shells of such containers can be generated by e.g. interface polycondensation of reactive Si or Ti compounds such as DMDEOS, TEOS, TMOS, TiPrO or TiBuO, analogously to the protocols of Examples 4 and 5. Such silica or titania based shells are perfectly dispersible in many water-born coating formulations because of the significant surface charge of the ceramic shells, have excellent adhesion properties to many coating matrices, especially to sol-gel matrices and are simultaneously brittle enough to be easily broken by mechanical impact on the coating providing therefore quick release of the active agents. Moreover, they can be simply surface-modified by means of numerous organosilanes and thus can be adapted to be dispersible in various organic coating formulations as well.

Water born epoxy coatings containing containers with polyurethane/polyurea shells and filled with one or more oganosilanes are suitable for complex water repelling and corrosion protection of steel and aluminum substrates. The shells of such containers can be generated by e.g. interface polymerization of reactive isocyanate and alcohol or amine compounds analogously to the protocols of Examples 6 and 7.

Synthetic high- and room-temperature-curable polymeric coatings with containers possessing polyurea or nylon shells and oily core with dissolved organosulfur compounds are suited for protection from fouling; room-temperature-curable water born polymeric coatings containing containers with polystyrene shells and oily core with dissolved derivatives of fatty acids (metal salts etc.) will provide a good tribological protection of surfaces.

The polymeric shells of such containers can be generated by e.g. interfacial polymerization of the respective monomers (polyurea, nylon) or by polymer interface deposition induced by solvent evaporation (polystyrene), according to known protocols.

The containers and coatings of the present invention may be used advantageously for a broad range of applications. Some non-limiting applications are anti-corrosive coatings (if the core-soluble active agent comprises a corrosion inhibitor), antifouling coatings, e.g. for the surfaces of ships, docks and other constructions involving wetted surfaces (if the active agent comprises an antifouling agent), water-repelling coatings, in particular for textiles, polymers, metals or ceramics (if the active agent comprises a water-repellant), tribological coatings for controlling wear and friction between various heavily loaded contacting surfaces, e.g. for the performance increase and protection of moving machine parts, (if the active agent comprises a lubricant), protective coatings against mechanical damages of coating matrix (if the active agent comprises a sealant), catalytic coatings with the possibility to switch on a chemical reaction at whole coating surface area upon action of the external trigger (if the active agent comprises a catalyst).

Simultaneous application of containers with different active agents or of containers encapsulating more than one kind of active agent (multifunctional containers) can be also used advantageously for the creation of diverse multifunctional coatings with many synergistically acting specific features, e.g. for protective anti-corrosive water-repelling coatings (active agents are inhibitor, water-repellant, and optionally sealant). Consequently, such multifunctional coatings and multi-functional containers represent a preferred embodiment of the invention.

### Brief description of the drawings

**Fig. 1** represents a scanning electron micrograph of polystyrene micro- and nanocapsules comprising a water-immiscible core consisting of the water-repelling agent AOT in dodecane.
**Fig. 2** represents a scanning electron micrograph of silica nanocapsules comprising a water-miscible core consisting of an aqueous solution of corrosion inhibitor ammonium heptamolybdate tetrahydrate.
**Fig. 3** represents a scanning electron micrograph of microcapsules comprising a shell of silica encapsulating a water-immiscible core consisting of an oil solution of the corrosion inhibitor 2-hydroxybenzaldehyde oxime.
**Fig. 4** represents a scanning electron micrograph of nanocapsules comprising a ceramic shell of titanium dioxide encapsulating a water-immiscible core consisting of an oil solution of the corrosion inhibitor 8-hydroxyquinoline.
**Fig. 5** represents a scanning electron micrograph of micro-and nanocapsules comprising a polyurea shell encapsulating a water-immiscible core consisting of a cyclohexanone solution of polymerization catalyst compound from the group of thiurams.
**Fig. 6** represents a scanning electron micrograph of micro-and nanocapsules comprising a polyurethane shell encapsulating a water-immiscible core consisting of an oil solution of the water-repelling agent MDMOS.
**Fig. 7** represents a scanning electron micrograph of micro-and nanocapsules comprising a PEI/PSS polyelectrolyte shell encapsulating a water-immiscible core consisting of an oil solution of the antifouling agent pyridinethionine.
**Fig. 8** represents a scanning electron micrograph of microcapsules comprising a composite nanoparticle/polyelectrolyte (silica nanoparticles/PAH/PSS) shell encapsulating a water-immiscible core consisting of an oil solution of the corrosion inhibitor 8-hydroxyquinoline.

The present invention will be better understood by referring to the following examples which are not intended to restrict the scope of the present invention in any manner.

### EXAMPLE 1

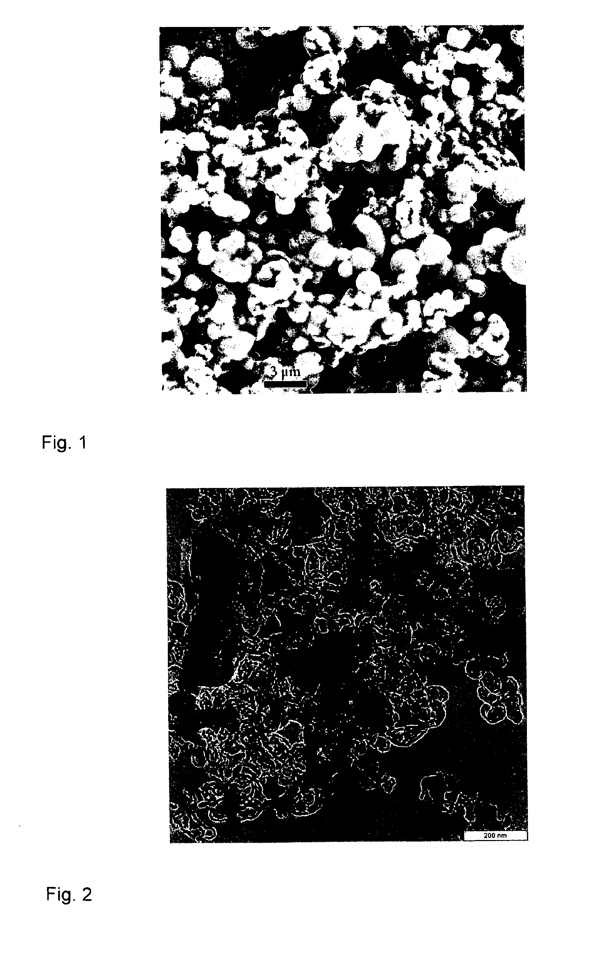

(A) Preparation of an oil phase In the mixture of solvents containing 22.82 g of ethylacetate (EA) and 12.75 g of dodecane (DD) were dissolved 4 g of polystyrene (Mw = 35000) and 2 g of surface-active water-repelling agent sodium dioctyl sulfosuccinate (AOT) to form the transparent solution.
(B) Preparation of an aqueous phase 100 ml of phosphate buffer solution (PBS, mixture of sodium hydrogenphosphate and sodium dihydrogenphosphate aqueous solutions with concentrations of 10 mM) with pH 7 was saturated with EA at atmospheric pressure and room temperature. Then, 135 mg of Triton X-100 was dissolved in this saturated PBS to form the transparent solution.
(C) Preparation of oil-in-water (O/W) emulsion 1 ml of oil phase was added to 9 ml of aqueous phase under continuous shaking by means of manually operated shaker Vortex (power stage 7) and was processed for further 1 minute.
(D) Preparation of micro- and nanocapsules containing a solution of surface-active water-repelling agent AOT in dodecane 10 ml of coarse O/W emulsion prepared in the step (C) was mixed with 90 ml of de-ionized MilliQ water under continuous stirring with a magnet stirrer at 150 rpm and then was kept at room temperature and continuous stirring overnight in the open vessel in a fume hood. After 12 h from the beginning of step (D) volatile EA was almost completely evaporated and an aqueous dispersion of PS micro- and nanocapsules containing a solution of AOT in dodecane was obtained (Fig. 1). The size of capsules varied from 600-700 nm to approx. 3 µm.
After gentle centrifugation (800 rpm, 10 min.), the creamed layer enriched on capsules was collected, washed two times with MilliQ water and finally dried at 70 deg C in a drier. The final yield of capsules was 80.3 wt%.

### EXAMPLE 2

The procedure of Example 2 was conducted in the same fashion as in steps (A) and (B) of Example 1 above, except that 1 g of dodecylamine (DDA) was used instead of AOT and 100 mg of cetylpyridinium bromide (CPB) was used instead of Triton X-100. In this case, the size of capsules varied from 700-800 nm to approx. 4.5 µm and their final yield was 77.4 wt%.

### EXAMPLE 3

(A) Preparation of an oil phase 3.826 g of Span 80 and 3.675 g of Tween 80 were dissolved in 80.214 ml (60 g) of dodecane (DD) yielding the clear solution.
(B) Preparation of an aqueous phase 5 g of corrosion inhibitor ammonium heptamolybdate tetrahydrate (NH₄)₆MO₇O₂₄·4H₂Owas dissolved in 25 ml of de-ionized MilliQ water giving a clear solution with pH 5.63.
(C) Preparation of water-in-oil (W/O emulsion 450 µl of aqueous phase was roughly mixed with 4.419 g of oil phase in a cylindrical glass vial having a total volume of 15 ml. Then a cylindrical titanium sonotrode having a diameter of working face of 10 mm was immersed in the liquid mixture and ultrasonic treatment of coarse W/O emulsion was performed. Duration of treatment was 3.5 min; treatment was carried out at 21 % of total capacity of ultrasonic set-up (500 W). Finally, a very fine slightly yellowish translucent W/O emulsion was obtained with monodisperse droplet size distribution. Maximum of droplet size (Zeta-average) was found to be of 90 nm with PDI of 0.15.
(D) Preparation of reaction medium 339 µl of tetraethoxysilane (TEOS) was dissolved in 12.661 ml of hexane forming a clear solution.
(E) Preparation of nanocapsules containing an aqueous solution of water-soluble corrosion inhibitor (ammonium molybdate) Fine W/O emulsion prepared on the step (C) was added upon slight manual shaking to the reaction medium prepared on the step (D) and obtained mixture was kept at room temperature in the closed 50 ml vial over two weeks. After 10 days from the beginning of step (E) reaction mixture became more and more translucent indicating an increasing formation of nanocapsules. Nanocapsules formed after two weeks are in the size range 30-90 nm, although most of them lie between 70 and 90 nm (Fig. 2)
After centrifugation (10000 rpm, 10 min.), the capsules sediment was collected, washed two times with hexane and finally dried at room temperature under 100 mbar in a desiccator. The final yield of capsules was 52.7 wt%.

### EXAMPLE 4

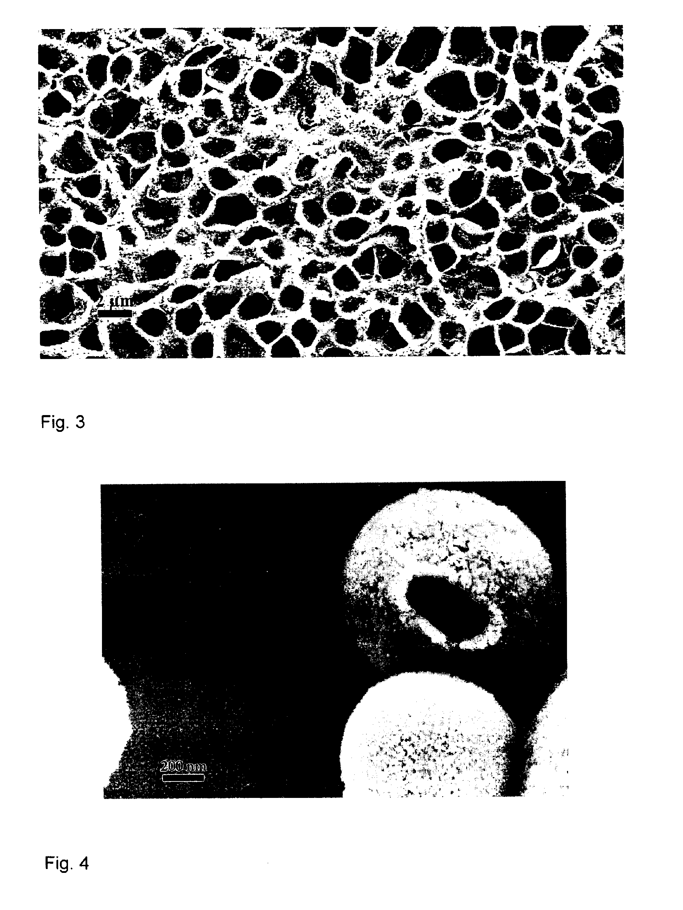

(A) Preparation of an oil phase 0.5 g of 2-hydroxybenzaldehyde oxime (2HBAO) as corrosion inhibitor for aluminium alloys was dissolved in 10 ml of dimethyldiethoxysilane (DMDEOS) under continuous shaking during 3 hours.
(B) Preparation of an aqueous phase 2.59 ml of saturated 14 M aqueous ammonia solution was diluted by 97.41 ml of de-ionized MilliQ water giving finally 1.27 wt% aqueous solution of NH₄OH.
(C) Preparation of oil-in-water (O/W) emulsion 600 µl of oil phase was added to 30 ml of aqueous phase and then thoroughly mixed by intensive shaking for 1 min. (Vortex, power stage 10). The obtained mixture was left to stand in the closed vial for 4 days at room temperature with occasional shaking.
(D) Preparation of microcapsules containing an oil solution of corrosion inhibitor (2HBAO) To the vial containing O/W emulsion prepared on the step (C), 150 µl of reactant mixture consisting of DMDEOS:TEOS = 20:80 (v/v) was gradually added during about 1 hour with continuous stirring (150 rpm). The obtained mixture was left to stand for another 3 days for the completion of capsules formation. Obtained microcapsules are fairly monodisperse (diameter of 2-3 µm, see Fig. 3).
After finishing of synthesis, microcapsules were collected in the form of the creamed layer enriched on capsules by means of cautious centrifugation (1000 rpm, 10 min.), were then washed two times with MilliQ water and finally dried at room temperature in a desiccator. The final yield of capsules was 37.6 wt%.

### EXAMPLE 5

(A) Preparation of an oil phase 50 mg of corrosion inhibitor 8-hydroxyquinoline (8HQ) was dissolved in the mixture of 760 µl of dioctylphthalate (DOPh) and 200 µl of titanium-(IV)-butoxide (TiButO) forming a transparent solution.
(B) Preparation of an aqueous phase 60 mg of Triton X-100 was dissolved in 30 ml of de-ionized MilliQ water at pH 6.7 and room temperature.
(C) Preparation of oil-in-water (O/W) emulsion and formation of nanocapsules containing corrosion inhibitor 0.9 ml of oil phase was initially manually pre-mixed with 30 ml of aqueous phase and then thoroughly mixed by means of manually operated shaker for 1 min. Then a cylindrical titanium sonotrode having a diameter of working face of 15 mm was immersed in the liquid mixture and ultrasonic treatment of coarse O/W emulsion was performed. Duration of treatment was 1 min; treatment was carried out at 20 % of total capacity of ultrasonic set-up (450 W). During premixing and ultrasonication stages, highly reactive molecules of TiButO diffuse to the oil-water interface and undergo a fast hydrolysis by water with following polycondensation reaction forming the solid ceramic shell of nanocapsules containing oil solution of corrosion inhibitor 8HQ. Finally, a turbid yellowish aqueous dispersion of nanocapsules was obtained with polydisperse (from 200 nm to 900 nm) particle size distribution (Fig. 4). The final yield of capsules was about 35 wt%.

### EXAMPLE 6

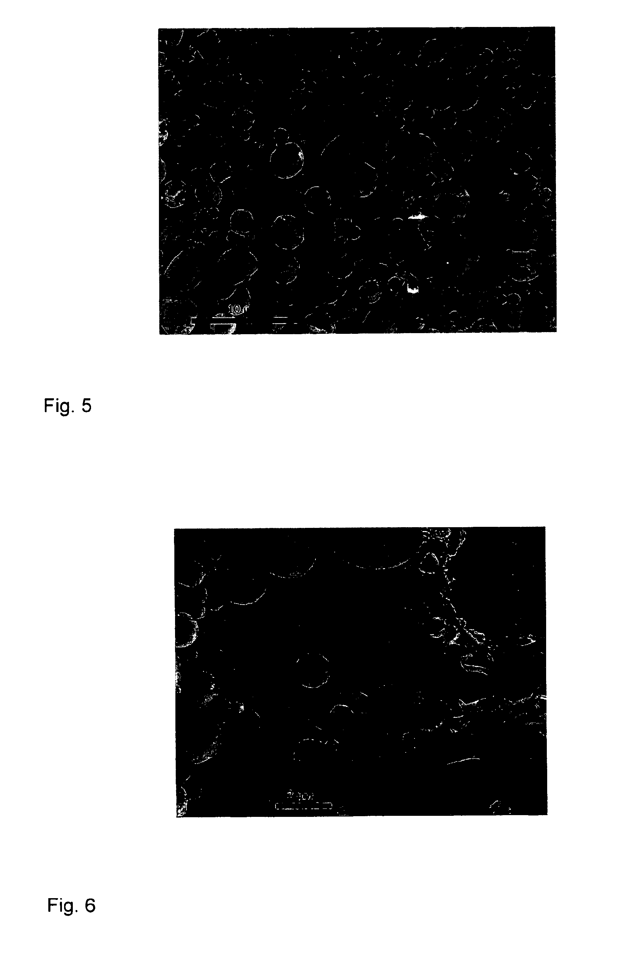

(A) Preparation of an oil phase 800 mg of a compound from thiuram group (S) (polymerization catalyst) and 1280 µl of prepolymer poly(phenylisocyanate)-co-formaldehyde) (Mn ∼ 340; PP) were dissolved in 4 ml of cyclohexanone (CHn) forming a clear solution.
(B) Preparation of an aqueous phase 300 ml of Milli-Q de-ionized water with pH about 6.5 was saturated with cyclohexanone (CHn) at atmospheric pressure and room temperature. Then, 700 mg of sodium dodecylsulfate was dissolved in 240 ml of this saturated aqueous cyclohexanone solution.
(C) Preparation of reaction medium 1560 µl of tetraethylenepentamine was dissolved in 120 ml of aqueous phase prepared on the step (B)
(D) Preparation of oil-in-water (O/W) emulsion The oil phase prepared on the step (A) was injected into 120 ml of aqueous phase and was immediately thoroughly mixed for 3 min at 17500 rpm by the Ultra-Turrax Homogenizer.
(E) Preparation of micro- and nanocapsules containing polymerization catalyst (S) The reaction solution prepared on the step (C) was added under room temperature and continuous stirring at 350 rpm to the O/W-emulsion prepared on the step (D) and then was left to stand for 1 hour for the completion of capsules formation. The obtained micro- and nanocapsules were highly polydisperse (from approx. 300 nm to 5 µm, see Fig. 5) and after washing by Milli-Q de-ionized water were strongly positively charged (Zeta-potential is +46 mV) indicating polyurea nature of capsules shell owing the significant amount of positively charged amino-groups.
The solid substance obtained by capsules pulverization, extraction and subsequent evaporation of this extract was analyzed by FTIR. The IR spectrum demonstrated an exact agreement between the spectrum of this solid and that of pure (S) compound, for instance for peaks at wavelengths at 1490, 1240, 940 and 520 cm⁻¹ indicating presence of arylic double bond, carbon-nitrogen bond, thiocarbonyl bond and disulfide bond, respectively. The final yield of capsules was about 40 wt%.

### EXAMPLE 7

(A) Preparation of an oil phase 240 mg of a prepolymer poly(phenylisocyanate)-co-formaldehyde) (Mn ∼ 375; PP2) were dissolved in mixture of 250 µl of diethyl phthalate (DEPh) and 550 µl of water-repelling agent methoxy(dimethyl)octylsilane (MDMOS) forming a homogeneous transparent solution.
(B) Preparation of an aqueous phase 1 g of poly(vinyl alcohol) (PVA, Mw - 10000, 99% hydrolyzed) was dissolved in 50 ml of phosphate buffer solution (PBS, mixture of sodium hydrogenphosphate and sodium dihydrogenphosphate aqueous solutions with concentrations of 10 mM, pH 7) at 80 °C under continuous stirring for 40 min.
(C) Preparation of reaction medium 200 mg of 1,4-diazabicyclo[2.2.2]octane (DABCO) was dissolved in 10 ml of phosphate buffer solution (PBS, mixture of sodium hydrogenphosphate and sodium dihydrogenphosphate aqueous solutions with concentrations of 10 mM, pH 7) forming a clear solution.
(D) Preparation of oil-in-water (O/W) emulsion The oil phase prepared on the step (A) was added to the 10 ml of aqueous phase prepared on the step (B) and the mixture was immediately intensively and thoroughly stirred for 3 min at 17500 rpm by the Ultra-Turrax Homogenizer.
(E) Preparation of micro and nanocapsules containing an oil solution of water-repelling agent MDMOS The O/W-emulsion prepared on the step (D) immediately after finishing of the step (D) was added under room temperature and continuous gentle stirring to 10 ml of reaction medium prepared on the step (C) and was then left to stand overnight for the completion of capsules formation. The obtained micro-and nanocapsules were highly polydisperse (from approx. 200 nm to 5 µm, see Fig. 6) and after washing by Milli-Q de-ionized water had slightly positively charged (Zeta-potential is +4 mV) indicating polyurethane nature of capsules shell owing only the small amount of charged ionizable groups. The final yield of capsules was about 52 wt%.

### EXAMPLE 8

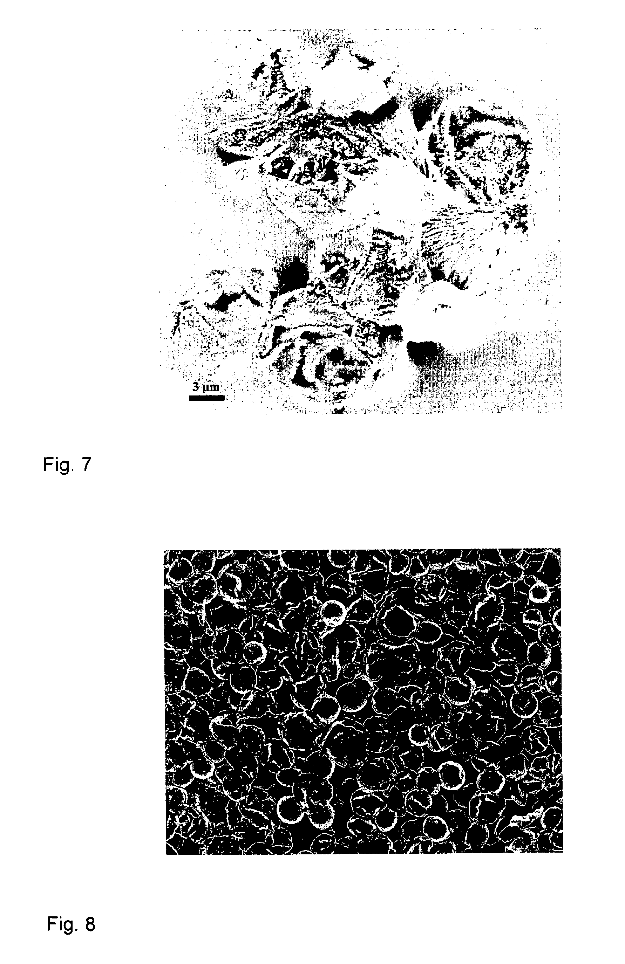

(A) Preparation of an oil phase 200 mg of dioctadecyldimethylammonium bromide (DODDMAB) and 5 mg of oil-soluble antifouling agent pyridinethione (PT) were dissolved in 100 ml of mixture consisting of ethylacetate (EA):decane (DC) = 1:2 (v/v) forming a clear solution.
(B) Preparation of an aqueous phase 200 ml of Milli-Q de-ionized water with pH about 6.5 was saturated with EA at atmospheric pressure and room temperature.
(C) Preparation of oil-in-water (O/W) emulsion 4 ml of oil phase was initially pre-mixed with 196 ml of aqueous phase by shaking for 30 sec and then thoroughly mixed for 4 min at 17500 rpm by the Ultra-Turrax Homogenizer. The obtained O/W-emulsion had a polydisperse drop size distribution with Zeta-average diameter of 1.9 µm, PDI of 0.32 and Zeta-potential of +76±7 mV. This O/W-emulsion was left to stand in the closed vial for 1 day while creamed layer enriched on oil droplets was formed at the liquid/air interface.
(D) Preparation of media for polyelectrolyte Layer-by-Layer (PE L-b-L) shell deposition Solutions of polyethylene imine (PEI, Mw ∼ 65000) and poly(sodium 4-styrenesulfonate) (PSS, Mw ∼ 70000) with concentrations of 20 mg/ml were prepared in Milli-Q de-ionized water with pH 6.5.
(E) Preparation of micro and nanocapsules containing an oil solution of an antifouling agent (PT)
   The creamed upper layer O/W-emulsion was added drop by drop to 40 ml of PSS solution upon continuous stirring at 700 rpm and mixture was stirred for 1 hour to achieve the binding of PSS to the surfaces of the primary O/W-emulsion droplets. Then, the remaining free polyelectrolyte was 3 times washed out by Milli-Q de-ionized water with pH 6.5 and finally O/W-emulsion droplets with PE monolayer coverage were left overnight to accomplish the cautious separation due to creaming. On the next step of encapsulation procedure, this creamed layer was added to the solution of oppositely charged polyelectrolyte PEI and then treated in the same fashion as at the deposition of first PE layer. Finally, successive adsorption of oppositely charged polyelectrolyte layers was carried out until the demanded number of polyelectrolyte layers was deposited.
The obtained aqueous dispersion of microcapsules filled with oil solution of an antifouling agent is polydisperse (Fig. 7), can not be transferred into dry state because of high fragility of PE shells and has to be stored in the form of suspension in water. The final yield of capsules was 26.4 wt%.

### EXAMPLE 9

(A) Preparation of an oil phase 2 g of corrosion inhibitor 8-hydroxyquinoline (8HQ) was dissolved in 10 in 10 ml of dimethyl phthalate (DMPh) in an ultrasonic bath (power - 30 W) until formation of clear solution.
(B) Preparation of an aqueous phase 1.856 g of lanthanum (III) chloride heptahydrate was dissolved in 100 ml of 2.5 wt% aqueous dispersion of Silica Ludox TMA with pH around 5 (adjusted by means of diluted HNO₃). Then this dispersion was saturated with 8HQ and DMPh at atmospheric pressure and room temperature.
(C) Preparation of oil-in-water (O/W) Pickering emulsion 5 ml of oil phase prepared on the step (A) were added to 20 ml of aqueous phase prepared on the step (B) and stirred gently by magnet stirrer for some minutes upon formation of coarse O/W-emulsion. This roughly emulsified mixture was then ultrasonicated for 3 minutes in the ice-cooled water bath by means of ultrasonic set-up at frequency 20 kHz and applied power of 100 W. For ultrasound treatment a titanium sonotrode with working face area of 0.785 cm² was used. At the end, the silica nanoparticle stabilized O/W-emulsion (Pickering emulsion) with the droplets having nanoparticulate shells was obtained. Silica nanoparticles forming the droplets shells impart them the negative Zeta-potential of approximately -50 mV providing for the high emulsion stability
(D) Preparation of media for polyelectrolyte Layer-by-Layer (PE L-b-L) shell deposition Solutions of poly(allylamine hydrochloride) (PAH, Mw ∼ 56000) and poly(sodium 4-styrenesulfonate) (PSS, Mw ∼ 70000) with concentrations of 2 mg/ml were prepared in aqueous (Milli-Q de-ionized water) 0.4 M solution of NaCl with pH around 5.
(E) Preparation of microcapsules containing an oil solution of corrosion inhibitor 8HQ Deposition of polyelectrolyte shell was done from solutions of oppositely charged polyelectrolytes prepared on the step
(D) Negatively charged droplets of O/W Pickering emulsion stabilized by silica nanoparticles were gently separated by careful centrifugation (2000 rpm, 10 min.) from dispersion medium (15 ml) and washed twice by Milli-Q de-ionized water at pH about 5.7. Then this loose deposit was redispersed in 1 ml of the same water and dropwise added to 15 ml of PAH aqueous solution prepared on the step (D). Addition was carried out under continuous stirring at 700 rpm and then the mixture was stirred for 15 min. to ensure the binding of PAH to the surfaces of the silica nanoparticles in the shells of O/W-Pickering emulsion droplets. After that, the residual free PAH in dispersion medium was 2 times washed out by Milli-Q de-ionized water with pH 5.5 and finally O/W Pickering emulsion with droplets coated by PAH monolayer was obtained. On the next step of polyelectrolyte shell deposition, these droplets were added to the solution of oppositely charged polyelectrolyte PSS and treated in the same fashion as at the deposition of first PAH layer. Finally, successive adsorption of oppositely charged polyelectrolyte layers was carried out until 6 polyelectrolyte layers were deposited. The obtained aqueous dispersion of microcapsules filled with oil solution of corrosion inhibitor 8HQ demonstrates a relatively narrow size distribution (Fig. 8) and high negative charge of particles (Zeta-potential of -50 mV). The final yield of capsules was 37.2 wt%.
Summarizing, the present invention solves the problem of creation of protective coatings with long-term feedback activity which practical implementation can significantly improve the protective properties of coatings applied, enhance durability of products under protection, save materials and resources at the coatings deposition and maintenance reduce environmental contamination. The invention has wide application and can be used, for example, in the field of corrosion protection of metals or production of new water-repelling materials for textile industry.

## Claims

1. Nano- or microsized containers comprising either a water immiscible or sparingly miscible core dispersible in aqueous dispersion medium or a water miscible core dispersible in non-aqueous dispersion medium and a core-soluble active agent which is selected from the groups of corrosion inhibitors, catalysts, accelerators of catalysts, adhesives, sealants, polymerizable compounds (monomers), surfactants, lubricants, antifouling agents, water repelling materials or their mixtures, and a stimulus-sensitive polymer/polyelectrolyte shell which is capable to encapsulate the core-soluble active agent and release the encapsulated agent in response to an external stimulus, in particular selected from the group consisting of humidity, ionic strength, pH, temperature, mechanical stress, constant and alternating magnetic or electromagnetic fields, corrosion products, electric current, and electrochemical potential.

2. The containers according to claim 1, wherein the stimulus-sensitive shell consists of or comprises a natural or synthetic organic or inorganic polymer, a polyelectrolyte, a nanoparticulate inorganic material, or an inorganic-organic composite.

3. The containers according to claim 1 or 2, wherein the stimulus-sensitive shell comprises one or more layers of a polymer or polyelectrolyte selected from the group consisting of poly(alkylene imine), e.g. poly(ethylene imine), poly(styrene sulfonate), poly(allyl amine), polyvinyl alcohol, poly(hydroxybutyric acid), polystyrene, poly(diallyldimethylammonium chloride), poly(meth)acrylic acid, polyalkylene glycols, e.g. polyethylene glycol, poly(vinylpyridine), and biopolymers and polyamino acids, such as gelatin, agarose, cellulose, alginic acid, dextran, casein, polyarginine, polyglycin, polyglutamic acid, polyaspartic acid, and derivatives, polyNIPAM, polyazo derivatives, light-sensitive metal and metal oxide nanoparticles, dyes, composites, copolymers or blends thereof.

4. The containers according to anyone of claims 1-3, wherein the shell is modified with cationic, anionic, zwitterionic and non-ionic surfactants, metal or semiconductor oxide nanoparticles, coupling agents such as alkoxysilanes, silanes, alkylisocyanates, anhydrides and halogenated anhydrides of organic acids, thioles.

5. The containers according to any one of claims 1-4 which have a water immiscible or sparingly miscible fluid interior comprising or consisting of saturated, cyclic or unsaturated hydrocarbons, silicone oil, ketones, aldehydes, fatty carboxylic acids and alcohols, esters, ethers, fatty amines, imines, imides, organometallics and their derivatives or any mixtures thereof.

6. The containers according to any one of claims 1-4 which have a water miscible fluid interior comprising or consisting of water, ketones, aldehydes, carboxylic acids, alcohols, esters, ethers, amines, imines, imides, organometallics and their derivatives or any mixtures thereof.

7. The containers according to any one of claims 1-6, wherein the core-soluble active agent comprises a corrosion inhibitor.

8. The containers according to claim 7, wherein the corrosion inhibitor is selected from one or more of the following groups: (i) an organic compound containing an amino group, carboxyl group or salts of carboxylic acids, pyridinium group, pyrazine group, an azole-derivative compound, one or more Schiff bases, (ii) an organic compound comprising one or more anions selected from the group comprising polyphosphate and its derivatives, nitrite, silicate, molybdate and polymolybdate and its derivatives, borate, iodate, permanganate, tungstate and polytungstate and its derivatives, vanadate and polyvanadate and its derivatives, (iii) an organic or inorganic compound comprising one or more cations selected from the group comprising lanthanides, magnesium, calcium, titanium, zirconium, yttrium, chromium and silver, and wherein the corrosion inhibitor may be a single compound or a mixture of two or more compounds as defined above.

9. The containers according to any one of claims 1-6, wherein the core-soluble active agent comprises a polymerizable chemical compound (monomer) having one or more polymerizable reactive units selected from the group comprising acryl-, vinyl-, methacryl-, cyanoacryl-, isocyanate-, alkoxy-, hydroxy-, and carboxy functional groups, diene- and polyene compounds or their mixtures.

10. The containers according to any one of claims 1-6, wherein the core-soluble active agent comprises an adhesive and which adhesive comprises a pre-polymerized monomer or oligomer made of monomers as defined in claim 9, or their mixture with one or some solvents, and optionally polymerization catalysts, other adhesives, sealants, wetting promoters and fillers.

11. The containers according to any one of claims 1-6, wherein the core-soluble active agent comprises a lubricant, which is a chemical compound or a mixture of compounds selected from the group comprising fatty acids and their metal salts, fatty alcohols, fatty amines, long-chain hydrocarbons, fluorinated hydrocarbons, glycerol, glycols, and other polyols, polysaccharides and their derivatives.

12. The containers according to any one of claims 1-6, wherein the core-soluble active agent comprises a water repelling material, which is a chemical compound or a mixture of compounds selected from the group comprising fatty acids and their metal salts, fatty alcohols, fatty amines, cationic, anionic, zwitterionic and non-ionic surfactants, long-chain alkylthioles, long-chain alkylisocyanates, long-chain hydro-carbons, fluorinated hydrocarbons, alkoxysilanes, silanes.

13. The containers according to any one of claims 1-6, wherein the core-soluble active agent comprises an antifouling agent or mixture thereof acting against accumulation of aquatic organisms, such as bacteria, plants, algae, molluscs etc., on wetted solid surfaces.

14. A coating comprising the containers of any one of claims 1-13 and capable to controlled release of the encapsulated active agent in response to an external stimulus/impact on the coating.

15. The coating according to claim 14, which is a natural or synthetic polymer coating, powder coating, sol-gel coating, galvanic coating, deep coating, coil coating, spray coating, furnish, polyelectrolyte multilayer, pre-treatment, primer, adhesive, paint or their mixture.
